# FASCICULE DE BREVET EUROPEEN

(11) **EP 1 849 066 B1**
(45) Date de publication et mention de la délivrance du brevet: **23.10.2019**
(21) Numéro de dépôt: 05850063.8
(22) Date de dépôt: 27.12.2005
(51) Int. Cl.: G06F 9/445

(54) **CHARGEMENT DYNAMIQUE SÉCURISÉ**
SICHERES DYNAMISCHES LADEN
SECURE DYNAMIC LOADING

(30) Priorité: 31.12.2004 FR 0414119
(43) Date de publication de la demande: 31.10.2007
(73) Titulaire: Trustonic SAS, 06560 Valbonne (FR)
(72) Inventeur: LEPORINI, David, F-94150 Rungis (FR); PRUNET, Vincent, F-06330 Roquefort-les-pins (FR); LE METAYER, Daniel, 38240 Meylan (FR)
(74) Mandataire: D Young & Co LLP
(86) Numéro de dépôt international: PCT/FR2005/003290
(87) Numéro de publication internationale: WO 2006/072705

(56) Documents cités:
- WO-A-03/083626
- US-A1- 2004 015 958
- US-B1- 6 327 652
- US-B1- 6 449 720

## Description

La présente invention concerne un procédé de chargement et d'exécution de logiciels, dénommés unités de chargement, ayant des niveaux de confiance différents par une unité de traitement informatique.

Elle concerne également une unité de traitement informatique susceptible de charger et d'exécuter des logiciels ayant des niveaux de confiance différents sous forme d'unités de chargement, ladite unité de traitement informatique comportant, outre une unité centrale de traitement, un noyau sécurisé contenu dans la couche la plus basse du système d'exploitation et une zone physique sécurisée dans la partie la plus sûre de l'architecture matérielle de cette unité de traitement informatique.

Il est connu que la sécurité d'un système dépend d'une chaîne de mesures et qu'elle est aussi faible que le maillon le plus faible de cette chaîne.

Pour un système informatique comportant une pluralité de logiciels, la sécurité du système dépend donc de la sécurité apportée ou non par chaque logiciel.

Le tout premier élément de sécurité à prendre en compte dans un tel système est l'intégrité des logiciels destinés à s'exécuter sur ce système.

Un logiciel est dit intègre quand il n'a pas été modifié par des éléments extérieurs, tels que, par exemple, un virus de façon à provoquer un fonctionnement différent de son fonctionnement normal tel que prévu par son concepteur.

Pour assurer cette intégrité au niveau des systèmes d'exploitation, des solutions basées sur l'authentification de l'application au moment de son chargement ont été proposées. Ces solutions doivent s'accompagner d'un processus de validation et de certification de l'application avant son téléchargement.

Par ailleurs, on connaît des systèmes de sécurité qui unifient les problématiques de spécification et d'interprétation des politiques de sécurité, de contrôle d'accès et d'autorisation. Ces systèmes sont connus de l'homme du métier sous le nom de « Système de Gestion de la Confiance ».

Un tel système est constitué d'un langage de description des opérations qui doivent être contrôlées par le système, d'un mécanisme d'identification des entités autorisées à effectuer ces opérations, d'un langage spécifiant les politiques des applications gouvernant les opérations que les entités sont autorisées à effectuer, d'un langage pour les certificats d'autorisation permettant la délégation d'une opération d'une entité vers une autre entité, et enfin d'un interpréteur permettant de valider les requêtes d'opérations émises par les entités, à partir d'une politique donnée et d'un ensemble de certificats d'autorisation.

Ces Systèmes de Gestion de la Confiance sont utilisés principalement dans les environnements distribués pour uniformiser les langages des politiques de sécurité et d'autorisation et pour décentraliser ces politiques.

Grâce à ces systèmes, la politique de sécurité d'une application donnée n'est plus statique mais dynamique par l'utilisation et la modification des certificats d'autorisation.

Cependant ces Systèmes de Gestion de la Confiance manquent de souplesse en ne répondant pas à des besoins importants des systèmes informatiques ouverts actuels.

Ainsi, il n'est pas possible de mettre en oeuvre et d'assurer la cohérence des politiques de sécurité provenant des applications elles-mêmes, politiques de sécurité dites « discrétionnaires », avec le même niveau de confiance que pour les politiques de sécurité fixées par le système d'exploitation, politiques de sécurité dites « mandataires ».

Le but de l'invention est donc de remédier à cet inconvénient en proposant un procédé et un système capables de télécharger et d'exécuter des applications logicielles en assurant une politique de sécurité dynamique dans le temps et cohérente aussi bien pour le système informatique que pour les applications téléchargées.

Le document US 2004/015958 A1 décrit un procédé de chargement d'applet dans lequel le niveau de sécurité supporté par le processus sécurisé doit être vérifié comme étant au moins aussi sécurisé que le niveau de sécurité indiqué dans les métadonnées associées a l'applet.

L'objet de l'invention est un procédé de chargement, d'installation et d'exécution de logiciels selon la revendication 1.

D'autres caractéristiques sont énoncées dans les revendications dépendantes.

Un autre objet est une unité de traitement informatique selon la revendication 8.

D'autres caractéristiques de cet objet sont énoncées dans les revendications dépendantes.

L'invention sera mieux comprise à la lecture de la description qui va suivre, donnée uniquement à titre d'exemple et faite en se référant aux dessins annexés, dans lesquels :
- la figure 1 est un schéma synoptique d'un système de traitement informatique selon un mode de réalisation de l'invention représenté dans sa structure en couche ;
- la figure 2 est un ordinogramme des flux de gestion de la sécurité ; et
- la figure 3 est un ordinogramme du chargement et de l'installation d'un logiciel.

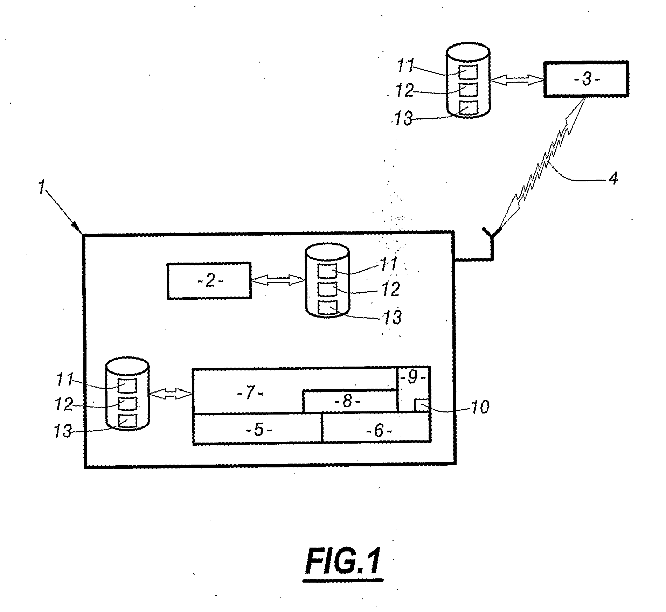

En référence à la figure 1, une unité 1 de traitement informatique est destinée à exécuter différents logiciels 2, 3 ayant des besoins de sécurité différents.

Cette unité 1 est, par exemple, une station de travail ou un terminal de paiement ou encore un téléphone mobile.

Les logiciels exécutables sur cette unité 1 sont chargés à demeure tel le logiciel 2 ou bien sont téléchargeables par l'intermédiaire d'un moyen 4 de communication de données tel le logiciel 3.

L'unité 1 comporte, dans son architecture matérielle, une unité centrale 5 de traitement chargée de l'exécution des instructions des logiciels et une zone physique sécurisée 6 de stockage. Cette zone sécurisée 6 est au minimum une zone de stockage ayant des conditions d'accès restreint et contrôlé. Afin de renforcer la sécurité de la zone 6, des mécanismes matériels de contrôle d'accès bien connus de l'homme du métier peuvent de plus être implémentés. Elle est la partie la plus sûre de l'architecture matérielle

Pour assurer le fonctionnement de l'unité 1, un système d'exploitation 7 est installé pour piloter les ressources matérielles de l'unité 1.

Ce système d'exploitation 7 comporte, en particulier, dans sa couche la plus basse, un noyau sécurisé 8. Celui-ci est chargé d'assurer la sécurité de l'unité de traitement 1 et en particulier d'assurer le respect des conditions d'accès de la zone sécurisée 6.

Dans un mode de fonctionnement normal de l'unité 1, le noyau sécurisé 8 s'exécute dès le début du lancement du système d'exploitation afin d'éviter toute interférence dangereuse pour la sécurité du système pendant cette phase de démarrage.

Un module de sécurité 9 est installé dans la zone sécurisée 6.

Ce module de sécurité 9, une fois installé, est en charge de la sécurité de l'unité 1 et en particulier d'assurer les vérifications de sécurité nécessaires avant l'installation d'un nouveau composant et de vérifier le respect des règles de la politique de sécurité de l'unité 1.

Ce module de sécurité 9 comporte une structure de données 10 appelée « Etat Courant du Système », ou ECS, destinée à recevoir des informations relatives à l'état sécuritaire de l'unité 1.

L'Etat Courant du Système 10 correspond à l'état de sécurité interne de l'unité 1 tel que maintenu par le module de sécurité 9. Il inclut des informations absolues comme, par exemple, un niveau de confiance minimum et des informations relatives au niveau de sécurité courant comme, par exemple, la présence de logiciels natifs ou non authentifiés installés dans l'unité 1. Cette structure de données ECS 10 est donc dynamique en ce qu'elle évolue dans le temps avec l'évolution de l'état de la sécurité de l'unité 1 de traitement.

Les logiciels 2 et 3 ainsi que les composants du système d'exploitation 7 autres que le noyau sécurisé 8 sont appelés dans la suite de cette description, et de façon indifférenciée, des « Unités de Chargement ». Ce sont donc des composants logiciels installés ou installables dans la mémoire de l'unité 1 de traitement.

Dans la suite de ce texte, on appelle installation, l'ensemble des trois phases suivantes,.seules ou en combinaison :
- le (télé)chargement qui consiste à transférer l'Unité de Chargement sur l'unité 1 de traitement,
- l'installation proprement dite qui consiste à mettre l'unité 1 de traitement et l'Unité de Chargement en condition pour que cette dernière puisse s'exécuter,
- l'exécution de l'Unité de Chargement sur l'unité 1 de traitement.

Chaque Unité de Chargement 2, 3, 7 est associée à trois structures de données qui définissent les informations de sécurité de cette Unité de Chargement en terme de besoins et de caractéristiques.

Ainsi chaque Unité de Chargement 2, 3, 7 est associée à une structure de données 11 appelée « Informations d'Identification de l'Unité », ou IIU, et qui contient une liste d'attributs caractérisant cette Unité de Chargement 2, 3, 7. Par exemple, cette structure de données IIU 11 contient, sous forme de référence codée, l'identité, le site d'origine, le certificat d'authentification, une information d'intégrité, le type de fonctionnalités assurées, le niveau de sécurité, l'organisation responsable, ou toute autre information pertinente pour caractériser l'Unité de Chargement 2, 3, 7.

Chaque Unité de Chargement 2, 3, 7 est également associée à une deuxième structure de données 12 appelée « Liste des Contraintes d'Installation », ou LCI ;

Cette structure de données LCI 12 définit l'expression non ambiguë des contraintes nécessaires au chargement, à l'installation proprement dite et à l'exécution de l'Unité de Chargement. Autrement dit, le changement, l'installation ou l'exécution de l'Unité de Chargement n'est effectué que si chaque contrainte est validée par le module de sécurité 9. Ces contraintes peuvent être exprimées au moyen d'un langage d'expression dédié ou prendre, plus simplement, la forme d'une liste d'attributs associés à un signe négatif ou positif. Par exemple, une Unité de Chargement associée à la LCI 12 [+ nom VM ; - type natif; + niveau TOP] ne peut être installée que s'il existe sur l'unité 1 un composant de nom VM, que s'il n'existe pas, par ailleurs, de composants natifs et que le niveau de sécurité courant de l'unité 1 est TOP.

Lorsque les conditions de la LCI 12 sont remplies, le module de sécurité 9 autorise le chargement, l'installation ou l'exécution de l'Unité de Chargement. Cependant ces contraintes doivent être respectées même lors de chargement ultérieur de nouveaux composants, c'est-à-dire pendant toute la période pendant laquelle l'Unité de Chargement est installée sur l'unité 1.

La structure de données LCI 12 peut également, mais de façon optionnelle, comporter un point d'entrée correspondant à un traitement qui doit être effectué par l'Unité de Chargement elle-même au moment de son installation proprement dite.

Enfin, chaque Unité de Chargement 2, 3, 7 est également associée à une troisième structure de données 13 appelée « Règles de Politique de Sécurité », ou RPS.

Cette structure de données RPS 13 définit les demandes d'une Unité de Chargement, telles que les accès souhaités à certaines ressources ou à d'autres Unités de Chargement.

Cette structure de données RPS 13 est utilisée au moment du chargement et de l'installation proprement dite pour détecter des demandes d'accès impossibles à satisfaire, ainsi qu'au moment de l'exécution en faisant intervenir le module de sécurité 9 dans les échanges entre Unités de Chargement.

Les structures de données IIU 11, LCI 12 et RPS 13 se présentent sous la forme de fichiers contenant des règles et des informations de sécurité saisies par un administrateur de sécurité de l'unité 1 et/ou des tiers de confiance.

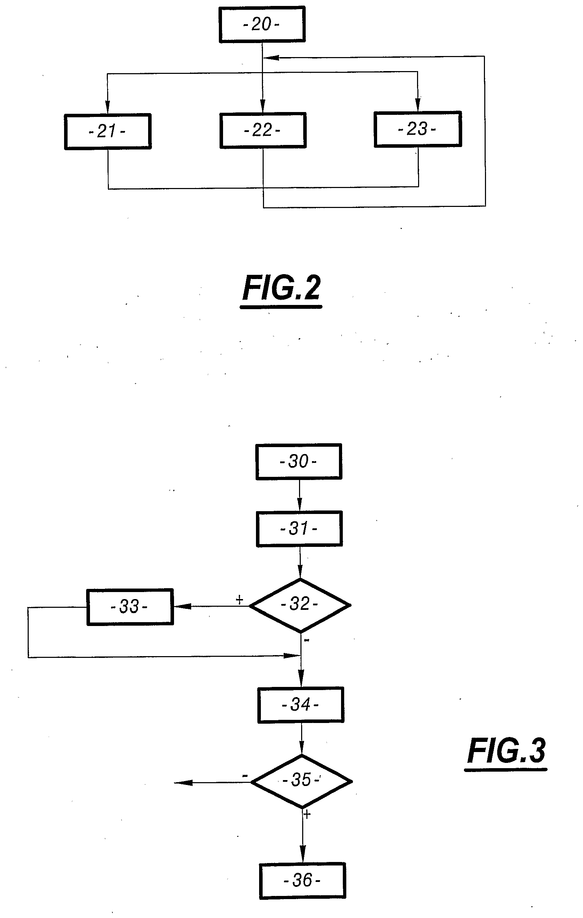

Le fonctionnement de l'unité 1 va maintenant être décrit en référence à la figure 2.

Lors de l'installation proprement dite de l'unité 1, le module de sécurité 9 est installé en 20 dans la zone sécurisée 6 par le noyau sécurisé 8. De plus, le noyau sécurisé 8 vérifie l'intégrité du module de sécurité 9. Ce processus d'installation sécurisée est bien connu de l'homme du métier en ce qu'il est basé sur des processus d'installation hiérarchisés et/ou chaînés dans lesquels chaque niveau n'est installé qu'après vérification du niveau immédiatement inférieur.

A partir de cette installation, le module de sécurité 9 est considéré comme le composant logiciel de confiance dans l'unité 1 et qui met en oeuvre la sécurisation de celle-ci. Ainsi il valide les besoins et caractéristiques de sécurité de chaque Unité de Chargement 2, 3, 7 avant d'autoriser leur chargement, installation ou exécution.

Puis, à chaque changement d'état interne de l'unité 1, le module de sécurité 9 actualise en 21 de manière sûre la structure de données « Etat Courant du Système » 10.

Un changement d'état peut, en particulier, correspondre à un événement affectant le niveau de confiance courant de l'unité 1. Par exemple, la détection d'une attaque dégrade le niveau de confiance. De même, l'installation proprement dite d'une nouvelle Unité de Chargement 2, 3, 7 déclenche un nouveau calcul par le module de sécurité 9 du niveau de confiance, ce calcul pouvant être, par exemple, le minimum des niveaux de confiance associés aux Unités de Chargement 2, 3, 7 installées.

Le module de sécurité 9 réceptionne et valide également en 22 les demandes d'accès aux ressources sensibles de l'unité 1. Il vérifie en particulier que chaque demande effectuée par une Unité de Chargement est valide au vu des règles énoncées dans la structure de données RPS 13 correspondant à cette Unité de Chargement.

Dans le cas d'un refus de la demande, celui-ci peut être silencieux ou bien signalé à l'utilisateur de l'unité 1 par tout moyen approprié.

Le module de sécurité 9 est également appelé en 23 à chaque demande d'installation d'une nouvelle Unité de Chargement.

Lors d'une installation, le module de sécurité 9 effectue des opérations de vérification et de validation, figure 3.

Il vérifie en 30 que les conditions sur l'identité de l'Unité de Chargement contenues dans la structure de données IIU 11 sont remplies.

A titre d'exemple, et selon les informations contenues dans l'IIU 11, le module de sécurité 9 vérifie :
- que le site d'origine figure parmi les sites autorisés,
- que le certificat d'authentification de l'Unité de Chargement est valide,
- que l'Unité de Chargement est intègre,
- que son niveau de confiance est compatible avec le niveau de confiance général de l'unité 1 et/ou avec les niveaux de confiance minimaux des Unités de Chargement déjà installées,
- que l'Unité de Chargement ne nécessite pas de fonctionnalités interdites,
- que l'entité responsable de l'Unité de Chargement ne figure pas en une liste d'entités interdites,

Puis, le module de sécurité 9 vérifie en 31 que les conditions définies dans la structure de données « Liste des Contraintes d'Installation » 12 sont remplies par l'état courant de l'unité 1 contenue dans la structure de données ECS 10. Cette vérification n'est, bien sûr, effectuée que si cette structure de données est non vide.

Si la structure de données LCI 12 contient un point d'entrée, étape 32, alors celui-ci est appelé en 33 pour permettre l'exécution des vérifications programmées par le développeur de l'Unité de Chargement.

Un cas particulier de vérification des contraintes contenues dans la structure de données LCI 12 concerne des Unités de Chargement dites conditionnelles. Ce sont des Unités de Chargement dont les règles d'installation dépendent de règles appartenant à d'autres Unités de Chargement. Par exemple, une contrainte concernant une telle Unité de Chargement A pourrait être « l'installation de l'Unité de Chargement A n'est autorisée que si l'Unité de Chargement B est installée et que celle-ci autorise l'installation de l'Unité A ».

Ces contraintes conditionnelles sont résolues par le module de sécurité 9 qui analyse donc si ces conditions sont remplies.

Puis le module de sécurité 9 vérifie en 34 l'acceptabilité des demandes de l'Unité de Chargement contenues dans sa structure de données « Règles de Politique de Sécurité » 13.

Dans le cas particulier où cette structure est vide, c'est-à-dire ne contient pas de demandes, cette étape 34 n'est pas mise en oeuvre.

En particulier, il vérifie que les demandes d'accès aux ressources ou à d'autres Unités de Chargement peuvent être satisfaites.

Dans le cas de demandes conditionnelles liées à une délégation d'autorisation d'une ou plusieurs structures de données RPS 13 appartenant à d'autres Unités de Chargement, le module de sécurité 9 résout ces conditions pour déterminer l'acceptabilité de ces demandes.

Si toutes les vérifications précédentes se sont révélées positives, étape 35, alors le module de sécurité 9 accepte en 36 le chargement, l'installation et/ou l'exécution de l'Unité de Chargement.

Sinon, ce chargement et/ou cette installation et/ou cette exécution sont refusés par le module de sécurité 9. Ce refus peut être signalé au demandeur par tout moyen.

On a ainsi décrit un procédé de chargement, d'installation et d'exécution de logiciels, dénommés unités de chargement, ayant des niveaux de confiance différents par une unité 1 de traitement informatique, et qui consiste au moins à :
- associer à chaque unité de chargement 2, 3, 7
   - une structure de données 11 d'information d'identification de cette unité de chargement ;
   - une structure de données 12 de contrainte d'installation ; et
   - une structure de données 13 constitutive d'un ensemble de règles de politique de sécurité ; et
- associer à ladite unité 1 de traitement informatique une structure de données 10 dynamique représentative de l'état de sécurité courant de l'unité de traitement informatique ;
- appliquer les contraintes d'installation et les règles de politique de sécurité, contrôler et actualiser la structure de données 10 dynamique et établir un dialogue interactif entre chaque unité de chargement 2, 3, 7 et ladite structure de données 10 dynamique par l'intermédiaire d'un module de sécurité 9 autonome, après installation.

Le procédé ainsi décrit permet avantageusement de télécharger et d'exécuter des applications logicielles en assurant une politique de sécurité dynamique dans le temps et cohérente aussi bien pour le système informatique que pour les applications téléchargées.

En effet, toutes les demandes de chargement, ainsi que les communications entre composants, sont réalisées par le truchement du module de sécurité.

Les politiques de sécurité discrétionnaires des Unités de Chargement sont donc traitées de manière aussi sûre que les politiques mandataires du système d'exploitation.

De plus, les facteurs liés à l'état du système au moment de l'installation d'une Unité de Chargement sont pris en compte à travers les structures de données LCI et, de manière optionnelle, fournis à cette Unité de Chargement au moyen de la structure de données ECS. Ainsi, les facteurs liés à l'état du système tels que le niveau de sécurité courant, les autres applications présentes, ... sont pris en compte lors du chargement, de l'installation et de l'exécution de chaque Unité de Chargement.

Un autre avantage de l'invention est de permettre à chaque application chargée, c'est-à-dire à chaque Unité de Chargement, d'être garantie que le système qui la reçoit, c'est-à-dire l'unité de traitement, est dans un état de sécurité adéquat par rapport à ses besoins. Par exemple, une application sensible manipulant des clés cryptographiques a besoin de connaître l'état de sécurité du système avant de télécharger ou d'utiliser ses clés cryptographiques.

## Revendications

1. Procédé de chargement, d'installation et d'exécution de logiciels, dénommés unités de chargement, ayant des niveaux de confiance différents par une unité (1) de traitement informatique comprenant une unité centrale (5) de traitement chargée de l'exécution des instructions des logiciels et une zone physique sécurisée (6) de stockage, un système d'exploitation (7) étant en outre installé pour piloter des ressources matérielles de l'unité (1) de traitement informatique le procédé comprenant
- associer à chaque unité de chargement (2, 3, 7) au moins une structure de données (11, 12, 13) d'information des besoins et caractéristiques de sécurité de cette unité de chargement;
le procédé étant **caractérisé en ce qu'**il comprend :
- associer à ladite unité (1) de traitement informatique une structure de données (10) dynamique représentative de l'état de sécurité courant de l'unité (1) de traitement informatique; ladite structure de données dynamique étant mise à jour par l'intermédiaire d'un module de sécurité (9) autonome après un changement de l'état internet de l'unité (1) de traitement, ledit module de sécurité (9) étant installé dans la zone sécurisée (6) ; et
- valider les besoins et caractéristiques de sécurité de chaque unité de chargement (2, 3, 7) vis- à-vis de l'état courant de l'unité (1) de traitement informatique contenu dans ladite structure de données (10) dynamique par l'intermédiaire du module de sécurité (9) autonome; et
- si la validation est positive, autoriser par le module de sécurité (9) le chargement, l'installation ou l'exécution de l'unité de chargement (2, 3, 7),
et dans lequel ledit module de sécurité (9), suite à l'installation de ce module, assure le contrôle autonome au moins des étapes :
- de changement d'état interne du système,
- de demande d'accès aux ressources du système,
- de demande d'installation de chaque unité de chargement sur le système,
et dans lequel outre des informations absolues et des informations relatives, ledit module de sécurité (9) gère tout nouvel événement répertorié dans la structure de données dynamique représentative de l'état courant de l'unité de système d'exécution, ledit module de sécurité (9) assurant la gestion et la mise à jour d'une variable de niveau de confiance courant du système en fonction d'événements survenus tels que détection d'une attaque, et la modification de l'état de confiance après installation ou désinstallation d'une unité de chargement.

2. Procédé selon la revendication 1, **caractérisé en ce que** chaque unité de chargement (2, 3, 7) est associée à
- une structure de données (11) d'information d'identification de cette unité de chargement;
- une structure de données (12) de contrainte d'installation; et
- une structure de données (13) constitutive d'un ensemble de règles de politique de sécurité.

3. Procédé selon la revendication 2, **caractérisé en ce que** ladite structure de données (11) d'information d'identification de cette unité de chargement est formée par une liste d'attributs caractérisant cette unité de chargement comportant au moins une référence codée parmi la liste des références codées d'identité, de site d'origine, de certificat d'authentification, d'information d'intégrité, de type de fonctionnalité assurée, de niveau de sécurité, d'organisation responsable.

4. Procédé selon l'une des revendication 2 à 3, **caractérisé en ce que** la structure de données (12) de contrainte d'installation est formée par une liste d'attributs définissant les conditions d'installation de ladite unité de chargement, ladite liste d'attributs comportant au moins l'expression explicite des contraintes nécessaires à l'installation.

5. Procédé selon l'une des revendications 2 à 4, **caractérisé en ce que** ladite structure de données (13) constitutive d'un ensemble de règles de politique de sécurité comporte au moins:
- une référence d'accès à une ou plusieurs autres ressources;
- une référence à une ou plusieurs unités de chargement, ladite structure de données, constitutive d'un ensemble de règles politiques de sécurité étant accessible en lecture tant au cours d'une étape de chargement qu'au cours d'une étape d'exécution.

6. Procédé selon l'une des revendications 1 à 5, **caractérisé en ce que** ladite structure de données (10) dynamique représentative de l'état courant de l'unité de traitement informatique (1) comporte au moins des données représentatives d'informations absolues, telles qu'un niveau de confiance minimum, et des données représentatives d'informations relatives, telles que le niveau de sécurité courant lié à des applications natives ou non authentifiées.

7. Procédé selon l'une quelconque des revendications précédentes, **caractérisé en ce que** chaque unité de chargement (2, 3, 7) est formée par un composant logiciel installable en mémoire, ledit composant logiciel installable désignant tout composant du système d'exploitation, autre que le noyau sécurisé, de l'unité de traitement informatique jusqu'à toute application exécutée par cette dernière.

8. Unité de traitement informatique (1) susceptible de charger, d'installer et d'exécuter des logiciels, dénommés unités de chargement, ayant des niveaux de confiance différents, ladite unité de traitement informatique (1) comportant :
- une unité centrale (5) de traitement chargée de l'exécution des instructions des logiciels
- une zone physique sécurisée (6) de stockage,
- un système d'exploitation (7) installé pour piloter des ressources matérielles de l'unité (1) de traitement informatique,
l'unité de traitement informatique étant **caractérisée en ce qu'**elle comporte :
- une structure de données (10) dynamique représentative de l'état de sécurité courant de l'unité (1) de traitement informatique,
- un module de sécurité (9) adapté pour :
+ mettre à jour ladite structure de données (10) dynamique après un changement de l'état interne de l'unité (1) de traitement,
+ chaque unité de chargement (2, 3, 7) étant associée à au moins une structure de données (11, 12, 13) d'information des besoins et caractéristiques de sécurité de cette unité de chargement, valider les besoins et caractéristiques de sécurité de chaque unité de chargement (2, 3, 7) vis-à-vis de l'état courant de l'unité (1) de traitement informatique contenu dans ladite structure de données (10) dynamique, et
+ si la validation est positive, autoriser le chargement, l'installation ou l'exécution de l'unité de chargement (2, 3, 7),
le module de sécurité (9) étant installé dans la zone physique sécurisée (6),
et dans laquelle ledit module de sécurité (9), suite à l'installation de ce module, assure le contrôle autonome au moins des étapes :
- de changement d'état interne du système,
- de demande d'accès aux ressources du système,
- de demande d'installation de chaque unité de chargement sur le système,
et dans laquelle outre des informations absolues et des informations relatives, ledit module de sécurité (9) gère tout nouvel événement répertorié dans la structure de données dynamique représentative de l'état courant de l'unité de système d'exécution, ledit module de sécurité (9) assurant la gestion et la mise à jour d'une variable de niveau de confiance courant du système en fonction d'événements survenus tels que détection d'une attaque, et la modification de l'état de confiance après installation ou désinstallation d'une unité de chargement.

9. Unité de traitement informatique selon la revendication 8, **caractérisée en ce qu'**elle comprend en outre un noyau sécurisé (8) contenu dans la couche la plus basse du système d'exploitation (7) et une zone physique sécurisée, partie la plus sûre de l'architecture matérielle de cette unité de traitement informatique, ledit module de sécurité exécutant de manière autonome les fonctions :
- d'installation de nouvelles unités de chargement (2, 3, 7) ;
- de contrôle et de mise en oeuvre des règles de politique de sécurité telles que attribution et contrôle des droits d'accès en fonction du niveau de confiance de chaque unité de chargement ;
- de maintien de l'état courant et de l'intégrité du système en fonction des composants du système d'exploitation et des unités de chargement ;
- de vérification des contraintes définies par la structure de données de contraintes d'installation, associée à chaque unité de chargement (2, 3, 7).

10. Unité de traitement informatique selon la revendication 8 ou 9, **caractérisée en ce que**, sur requête d'installation d'une unité de chargement, ledit module de sécurité effectue une vérification des conditions sur l'identité de l'unité de chargement, à partir d'une structure de données d'information d'identification de cette unité de chargement, les opérations de vérification comportant au moins:
- la vérification, à partir de son identifiant, que le site d'origine hébergeant ladite unité de chargement figure parmi les sites autorisés;
- la vérification du certificat d'authentification de l'identité de l'unité de chargement;
- - la vérification de l'intégrité de l'unité de chargement; - la vérification, en référence à un niveau de confiance minimum, que le niveau de confiance associé à l'unité de chargement n'interdit pas l'installation de l'unité de chargement;
- la vérification, en référence à une liste de fonctionnalités proscrites, que la fonctionnalité de l'unité de chargement n'appartient pas à cette liste et n'interdit pas l'installation de cette unité de chargement;
- la vérification, à partir de son identifiant de site d'origine hébergeant ladite unité de chargement, que l'identité du distributeur de l'unité de chargement n'interdit pas l'installation de l'unité de chargement.

11. Unité de traitement informatique selon l'une des revendications 8 à 10, **caractérisée en ce que**, sur requête d'installation d'une unité de chargement et en présence d'une liste de contraintes d'installation non vide, ledit module de sécurité effectue en outre:
- un appel au point d'entrée de l'unité de chargement pour faire exécuter une pluralité de vérifications spécifiques à l'unité de chargement, telles que vérification d'intégrité de données ou de parties du code de l'unité de chargement, initialisation de données spécifiques de l'unité de chargement;
- une vérification de la présence de composants dans le système ou dans l'unité de chargement correspondant à des attributs positifs et de l'absence de composants ou unité de chargement correspondant à des attributs négatifs.

12. Unité de traitement informatique selon la revendication 11, **caractérisée en ce que** la vérification en présence d'une liste de contraintes d'installation non vide comprend la vérification directe des contraintes d'installation à partir d'une ou plusieurs listes de contraintes attachées à différentes unités de chargement et/ou la vérification indirecte à partir d'une délégation d'autorisation des règles de contraintes d'installation obtenues par résolution.

13. Unité de traitement informatique selon l'une des revendications 8 à 12, **caractérisée en ce que**, sur requête d'installation d'une unité de chargement et en présence d'une structure de données constitutive d'un ensemble de règles de politique de sécurité non vide, ledit module de sécurité effectue une vérification de l'acceptabilité des demandes de l'unité de chargement, lesdites demandes pouvant comporter des demandes d'accès à des ressources du système et la liste des unités de chargement susceptibles d'appeler au moins l'un des points d'entrée correspondants.

14. Unité de traitement informatique selon l'une des revendications 8 à 13, **caractérisée en ce que**, suite à la vérification à la valeur vraie de l'ensemble des vérifications précédentes, ledit module de sécurité autorise l'installation de ladite unité de chargement, sous l'autorité de l'unité centrale de traitement de ladite unité de traitement informatique, sinon, suite à l'absence de vérification à la valeur vraie de l'une des vérifications précédentes, ledit module de sécurité inhibe l'installation de ladite unité de chargement, le refus d'installation pouvant faire l'objet d'une signalisation au niveau de l'interface homme-machine associée à ladite unité de traitement.

15. Unité de traitement informatique selon l'une quelconque des revendications 8 à 14, **caractérisée en ce que** le module de sécurité (9) est installé dans ladite zone physique sécurisée (6) par l'intermédiaire du noyau sécurisé dudit système d'exploitation, ledit module de sécurité (9) installé étant vérifié du point de vue de son intégrité par un mécanisme de vérification d'intégrité durant la séquence de démarrage de ladite unité de traitement.

## Patentansprüche

1. Verfahren zum Laden, zur Installation und zur Ausführung von Softwareprogrammen, Ladeeinheiten genannt, die unterschiedliche Vertrauensniveaus aufweisen, durch eine Informationsverarbeitungseinheit (1), welche eine zentrale Verarbeitungseinheit (5), die für die Ausführung der Anweisungen der Softwareprogramme verantwortlich ist, und einen sicheren physischen Speicherbereich (6) umfasst, wobei außerdem ein Betriebssystem (7) installiert ist, um Hardware-Ressourcen der Informationsverarbeitungseinheit (1) zu steuern, wobei das Verfahren umfasst:
- Zuordnen, zu jeder Ladeeinheit (2, 3, 7), wenigstens einer Datenstruktur (11, 12, 13) mit Informationen über die Sicherheitserfordernisse und -merkmale dieser Ladeeinheit,
wobei das Verfahren **dadurch gekennzeichnet ist, dass** es umfasst:
- Zuordnen, zu der Informationsverarbeitungseinheit (1), einer dynamischen Datenstruktur (10), die für den aktuellen Sicherheitszustand der Informationsverarbeitungseinheit (1) repräsentativ ist; wobei die dynamische Datenstruktur nach einer Änderung des internen Zustands der Verarbeitungseinheit (1) über ein autonomes Sicherheitsmodul (9) aktualisiert wird, wobei das Sicherheitsmodul (9) in dem sicheren Bereich (6) installiert ist; und
- Validieren der Sicherheitserfordernisse und -merkmale jeder Ladeeinheit (2, 3, 7) gegenüber dem aktuellen Zustand der Informationsverarbeitungseinheit (1), der in der dynamischen Datenstruktur (10) enthalten ist, über das autonome Sicherheitsmodul (9); und
- falls die Validierung positiv ist, Genehmigen, durch das Sicherheitsmodul (9), des Ladens, der Installation oder der Ausführung der Ladeeinheit (2, 3, 7),
und wobei das Sicherheitsmodul (9) im Anschluss an die Installation dieses Moduls die autonome Steuerung wenigstens der Schritte sicherstellt:
- der Änderung des internen Zustands des Systems,
- der Anforderung eines Zugriffs auf die Ressourcen des Systems,
- der Anforderung einer Installation jeder Ladeeinheit auf dem System,
und wobei, außer absoluten Informationen und relativen Informationen, das Sicherheitsmodul (9) jedes neue Ereignis verwaltet, das in der dynamischen Datenstruktur verzeichnet ist, die für den aktuellen Zustand der Einheit des Ausführungssystems repräsentativ ist, wobei das Sicherheitsmodul (9) die Verwaltung und die Aktualisierung einer Variablen des aktuellen Vertrauensniveaus des Systems in Abhängigkeit von eingetretenen Ereignissen, wie der Detektion eines Angriffs, und der Änderung des Vertrauenszustands nach Installation oder Deinstallation einer Ladeeinheit sicherstellt.

2. Verfahren nach Anspruch 1, **dadurch gekennzeichnet, dass** jede Ladeeinheit (2, 3, 7) zugeordnet wird zu
- einer Datenstruktur (11) von Identifikationsinformationen dieser Ladeeinheit;
- einer Datenstruktur (12) von Installationsbeschränkungen;
- einer Datenstruktur (13), die aus einer Gesamtheit von Regeln der Sicherheitspolitik besteht.

3. Verfahren nach Anspruch 2, **dadurch gekennzeichnet, dass** die Datenstruktur (11) von Identifikationsinformationen dieser Ladeeinheit von einer Liste von diese Ladeeinheit charakterisierenden Attributen gebildet wird, die wenigstens eine codierte Referenz aus der Liste der codierten Referenzen einer Identität, einer Ursprungs-Website, eines Authentifizierungszertifikats, von Integritätsinformationen, eines Typs der gewährleisteten Funktionalität, eines Sicherheitsniveaus, einer verantwortlichen Organisation beinhaltet.

4. Verfahren nach einem der Ansprüche 2 bis 3, **dadurch gekennzeichnet, dass** die Datenstruktur (12) von Installationsbeschränkungen von einer Liste von Attributen gebildet wird, welche die Installationsbedingungen der Ladeeinheit definieren, wobei die Liste von Attributen wenigstens den expliziten Ausdruck der für die Installation notwendigen Beschränkungen beinhaltet.

5. Verfahren nach einem der Ansprüche 2 bis 4, **dadurch gekennzeichnet, dass** die Datenstruktur (13), die aus einer Gesamtheit von Regeln der Sicherheitspolitik besteht, wenigstens beinhaltet;
- eine Referenz des Zugriffs auf eine oder mehrere andere Ressourcen;
- eine Referenz auf eine oder mehrere Ladeeinheiten, wobei die Datenstruktur, die aus einer Gesamtheit von Regeln der Sicherheitspolitik besteht, einen Lesezugriff sowohl während eines Ladeschrittes als auch während eines Ausführungsschrittes ermöglicht.

6. Verfahren nach einem der Ansprüche 1 bis 5, **dadurch gekennzeichnet, dass** die dynamische Datenstruktur (10), die für den aktuellen Zustand der Informationsverarbeitungseinheit (1) repräsentativ ist, wenigstens Daten beinhaltet, die für absolute Informationen repräsentativ sind, wie ein minimales Vertrauensniveau, und Daten, die für relative Informationen repräsentativ sind, wie das aktuelle Sicherheitsniveau, das mit nativen oder nicht authentifizierten Anwendungen verbunden ist.

7. Verfahren nach einem der vorhergehenden Ansprüche, **dadurch gekennzeichnet, dass** jede Ladeeinheit (2, 3, 7) von einer im Speicher installierbaren Softwarekomponente gebildet wird, wobei diese installierbare Softwarekomponente jede Komponente des Betriebssystems, mit Ausnahme des sicheren Kerns, der Informationsverarbeitungseinheit bezeichnet, bis hin zu jeder Anwendung, die von dieser Letzteren ausgeführt wird.

8. Informationsverarbeitungseinheit (1), welche dazu eingerichtet ist, Softwareprogramme, Ladeeinheiten genannt, die unterschiedliche Vertrauensniveaus aufweisen, zu laden, zu installieren und auszuführen, wobei die Informationsverarbeitungseinheit (1) aufweist:
- eine zentrale Verarbeitungseinheit (5), die für die Ausführung der Anweisungen der Softwareprogramme verantwortlich ist,
- einen sicheren physischen Speicherbereich (6),
- ein Betriebssystem (7), das zum Steuern von Hardware-Ressourcen der Informationsverarbeitungseinheit (1) installiert ist,
wobei die Informationsverarbeitungseinheit **dadurch gekennzeichnet ist, dass** sie aufweist:
- eine dynamische Datenstruktur (10), die für den aktuellen Sicherheitszustand der Informationsverarbeitungseinheit (1) repräsentativ ist,
- ein Sicherheitsmodul (9), das dafür ausgelegt ist:
+ die dynamische Datenstruktur (10) nach einer Änderung des internen Zustands der Verarbeitungseinheit (1) zu aktualisieren,
+ wenn jede Ladeeinheit (2, 3, 7), wenigstens einer Datenstruktur (11, 12, 13) mit Informationen über die Sicherheitserfordernisse und -merkmale dieser Ladeeinheit zugeordnet ist, die Sicherheitserfordernisse und -merkmale jeder Ladeeinheit (2, 3, 7) gegenüber dem aktuellen Zustand der Informationsverarbeitungseinheit (1), der in der dynamischen Datenstruktur (10) enthalten ist, zu validieren, und
+ falls die Validierung positiv ist, das Laden, die Installation oder die Ausführung der Ladeeinheit (2, 3, 7) zu genehmigen,
wobei das Sicherheitsmodul (9) in dem sicheren physischen Bereich (6) installiert ist,
und wobei das Sicherheitsmodul (9) im Anschluss an die Installation dieses Moduls die autonome Steuerung wenigstens der Schritte sicherstellt:
- der Änderung des internen Zustands des Systems,
- der Anforderung eines Zugriffs auf die Ressourcen des Systems,
- der Anforderung einer Installation jeder Ladeeinheit auf dem System,
und wobei, außer absoluten Informationen und relativen Informationen, das Sicherheitsmodul (9) jedes neue Ereignis verwaltet, das in der dynamischen Datenstruktur verzeichnet ist, die für den aktuellen Zustand der Einheit des Ausführungssystems repräsentativ ist, wobei das Sicherheitsmodul (9) die Verwaltung und die Aktualisierung einer Variablen des aktuellen Vertrauensniveaus des Systems in Abhängigkeit von eingetretenen Ereignissen, wie der Detektion eines Angriffs, und der Änderung des Vertrauenszustands nach Installation oder Deinstallation einer Ladeeinheit sicherstellt.

9. Informationsverarbeitungseinheit nach Anspruch 8, **dadurch gekennzeichnet, dass** sie außerdem einen sicheren Kern (8), der in der untersten Schicht des Betriebssystems (7) enthalten ist, und einen sicheren physischen Bereich, welcher der sicherste Teil der Hardwarearchitektur dieser Informationsverarbeitungseinheit ist, umfasst, wobei das Sicherheitsmodul autonom die Funktionen ausführt:
- der Installation neuer Ladeeinheiten (2, 3, 7) ;
- der Kontrolle und der Durchführung der Regeln der Sicherheitspolitik, wie Zuweisung und Kontrolle der Zugriffsrechte in Abhängigkeit vom Vertrauensniveau jeder Ladeeinheit;
- der Aufrechterhaltung des aktuellen Zustands und der Integrität des Systems in Abhängigkeit von den Komponenten des Betriebssystems und den Ladeeinheiten;
- der Überprüfung der Beschränkungen, die durch die Datenstruktur von Installationsbeschränkungen definiert sind, die jeder Ladeeinheit (2, 3, 7) zugeordnet ist.

10. Informationsverarbeitungseinheit nach Anspruch 8 oder 9, **dadurch gekennzeichnet, dass** bei einer Anforderung zur Installation einer Ladeeinheit das Sicherheitsmodul eine Überprüfung der Bedingungen hinsichtlich der Identität der Ladeeinheit durchführt, anhand einer Datenstruktur von Identifikationsinformationen dieser Ladeeinheit, wobei die Arbeitsschritte der Überprüfung wenigstens beinhalten:
- die Überprüfung, anhand ihrer Kennung, dass die Ursprungs-Website, welche die Ladeeinheit hostet, zu den genehmigten Websites gehört;
- die Überprüfung des Authentifizierungszertifikats der Identität der Ladeeinheit;
- die Überprüfung der Integrität der Ladeeinheit;
- die Überprüfung, unter Bezugnahme auf ein minimales Vertrauensniveau, ob das der Ladeeinheit zugeordnete Vertrauensniveau nicht die Installation der Ladeeinheit verbietet;
- die Überprüfung, unter Bezugnahme auf eine Liste von verbotenen Funktionalitäten, ob die Funktionalität der Ladeeinheit nicht zu dieser Liste gehört und nicht die Installation dieser Ladeeinheit verbietet;
- die Überprüfung, anhand ihrer Kennung der Ursprungs-Website, welche die Ladeeinheit hostet, dass die Identität des Verteilers der Ladeeinheit nicht die Installation der Ladeeinheit verbietet.

11. Informationsverarbeitungseinheit nach einem der Ansprüche 8 bis 10, **dadurch gekennzeichnet, dass** bei einer Anforderung zur Installation einer Ladeeinheit und bei Vorhandensein einer nicht leeren Liste von Installationsbeschränkungen das Sicherheitsmodul außerdem durchführt:
- einen Aufruf des Eingangspunktes der Ladeeinheit, um mehrere Überprüfungen ausführen zu lassen, die für die Ladeeinheit spezifisch sind, wie Überprüfung der Integrität von Daten oder von Teilen des Codes der Ladeeinheit, Initialisierung von spezifischen Daten der Ladeeinheit;
- eine Überprüfung des Vorhandenseins von Komponenten im System oder in der Ladeeinheit, die positiven Attributen entsprechen, und des Nichtvorhandenseins von Komponenten oder einer Ladeeinheit, die negativen Attributen entsprechen.

12. Informationsverarbeitungseinheit nach Anspruch 11, **dadurch gekennzeichnet, dass** die Überprüfung bei Vorhandensein einer nicht leeren Liste von Installationsbeschränkungen die direkte Überprüfung der Installationsbeschränkungen anhand einer oder mehrerer Listen von Beschränkungen, die mit verschiedenen Ladeeinheiten verbunden sind, und/oder die indirekte Überprüfung anhand einer Delegation der Autorisierung der Regeln von Installationsbeschränkungen, die durch Auflösung erhalten wurden.

13. Informationsverarbeitungseinheit nach einem der Ansprüche 8 bis 12, **dadurch gekennzeichnet, dass** bei einer Anforderung zur Installation einer Ladeeinheit und bei Vorhandensein einer Datenstruktur, die aus einer nicht leeren Gesamtheit von Regeln der Sicherheitspolitik besteht, das Sicherheitsmodul eine Überprüfung der Annehmbarkeit der Anfragen der Ladeeinheit durchführt, wobei diese Anfragen Anfragen zum Zugriff auf Ressourcen des Systems und die Liste der Ladeeinheiten, die in der Lage sind, wenigstens einen der entsprechenden Eingangspunkte aufzurufen, beinhalten können.

14. Informationsverarbeitungseinheit nach einem der Ansprüche 8 bis 13, **dadurch gekennzeichnet, dass**, nachdem bei sämtlichen vorangegangenen Überprüfungen die Überprüfung den Wert "wahr" geliefert hat, das Sicherheitsmodul die Installation der Ladeeinheit unter der Aufsicht der zentralen Verarbeitungseinheit der Informationsverarbeitungseinheit genehmigt, und andernfalls, nachdem bei einer der vorangegangenen Überprüfungen die Überprüfung nicht den Wert "wahr" geliefert hat, das Sicherheitsmodul die Installation der Ladeeinheit sperrt, wobei die Verweigerung der Installation Gegenstand einer Signalisierung auf der Ebene der Mensch-Maschine-Schnittstelle sein kann, die der Verarbeitungseinheit zugeordnet ist.

15. Informationsverarbeitungseinheit nach einem der Ansprüche 8 bis 14, **dadurch gekennzeichnet, dass** das Sicherheitsmodul (9) in dem sicheren physischen Bereich (6) mithilfe des sicheren Kerns des Betriebssystems installiert ist, wobei das installierte Sicherheitsmodul (9) hinsichtlich seiner Integrität durch einen Mechanismus zur Integritätsüberprüfung während der Startsequenz der Verarbeitungseinheit überprüft wird.

## Claims

1. Method for loading, installing and executing software items, dubbed loading units, having different levels of trust by a computer processing unit (1) comprising a central processing unit (5) charged with the execution of the instructions of the software items and a secure physical storage area (6), an operating system (7) being furthermore installed to drive hardware resources of the computer processing unit (1) the method comprising
- associating with each loading unit (2, 3, 7) at least one information data structure (11, 12, 13) in respect of the needs and security characteristics of this loading unit;
the method being **characterized in that** it comprises:
- associating with the said computer processing unit (1) a dynamic data structure (10) representative of the current security state of the computer processing unit (1); the said dynamic data structure being updated by way of an autonomous security module (9) after a change of the internal state of the processing unit (1), the said security module (9) being installed in the secure area (6); and
- validating the needs and security characteristics of each loading unit (2, 3, 7) in respect of the computer processing unit's (1) current state contained in the said dynamic data structure (10) by way of the autonomous security module (9); and
- if the validation is positive, authorizing by the security module (9) the loading, the installation or the execution of the loading unit (2, 3, 7),
and in which the said security module (9), subsequent to the installation of this module, ensures the autonomous control at least of the steps:
- of change of internal state of the system;
- of demand for access to the resources of the system;
- of demand for installation of each loading unit on the system,
and in which in addition to the absolute information items and the relative information items, the said security module (9) manages any new event catalogued in the dynamic data structure representative of the current state of the execution system unit, the said security module (9) ensuring the management and the updating of a variable of current level of trust of the system as a function of events that have arisen such as detection of an attack, and the modification of the state of trust after installation or deinstallation of a loading unit.

2. Method according to Claim 1, **characterized in that** each loading unit (2, 3, 7) is associated with
- an information data structure (11) for identifying this loading unit;
- an installation constraint data structure (12); and
- a constituent data structure (13) making up a set of security policy rules.

3. Method according to Claim 2, **characterized in that** the said information data structure (11) for identifying this loading unit is formed by a list of attributes characterizing this loading unit comprising at least one coded reference from among the list of the coded references of identity, of site of origin, of authentication certificate, of integrity information item, of type of functionality ensured, of security level, of responsible organization.

4. Method according to one of Claims 2 and 3, **characterized in that** the installation constraint data structure (12) is formed by a list of attributes defining the conditions of installation of the said loading unit, the said list of attributes comprising at least the explicit expression of the constraints which are necessary for installation.

5. Method according to one of Claims 2 to 4, **characterized in that** the said constituent data structure (13) making up a set of security policy rules comprises at least:
- a reference of access to one or more other resources;
- a reference to one or more loading units, the said data structure, constituent of a set of policy security rules being read-accessible both in the course of a loading step and in the course of an execution step.

6. Method according to one of Claims 1 to 5, **characterized in that** the said dynamic data structure (10) representative of the current state of the computer processing unit (1) comprises at least data representative of absolute information items, such as a minimum level of trust, and data representative of relative information items, such as the current security level related to native or unauthenticated applications.

7. Method according to any one of the preceding claims, **characterized in that** each loading unit (2, 3, 7) is formed by a software component installable in memory, the said installable software component designating any component of the operating system, other than the secure kernel, from the computer processing unit up to any application executed by the latter.

8. Computer processing unit (1) able to load, to install and to execute software items, dubbed loading units, having different levels of trust, the said computer processing unit (1) comprising:
- a central processing unit (5) charged with the execution of the instructions of the software items
- a secure physical storage area (6),
- an operating system (7) installed to drive hardware resources of the computer processing unit (1),
the computer processing unit being **characterized in that** it comprises:
- a dynamic data structure (10) representative of the current security state of the computer processing unit (1),
- a security module (9) adapted to:
+ update the said dynamic data structure (10) after a change of the internal state of the processing unit (1),
+ each loading unit (2, 3, 7) being associated with at least one information data structure (11, 12, 13) in respect of the needs and security characteristics of this loading unit, validate the needs and security characteristics of each loading unit (2, 3, 7) in respect of the computer processing unit's (1) current state contained in the said dynamic data structure (10), and
+ if the validation is positive, authorize the loading, the installation or the execution of the loading unit (2, 3, 7),
the security module (9) being installed in the secure physical area (6),
and in which the said security module (9), subsequent to the installation of this module, ensures the autonomous control at least of the steps:
- of change of internal state of the system;
- of demand for access to the resources of the system;
- of demand for installation of each loading unit on the system,
and in which in addition to the absolute information items and the relative information items, the said security module (9) manages any new event catalogued in the dynamic data structure representative of the current state of the execution system unit, the said security module (9) ensuring the management and the updating of a variable of current level of trust of the system as a function of events that have arisen such as detection of an attack, modification of the state of trust after installation or deinstallation of a loading unit.

9. Computer processing unit according to Claim 8, **characterized in that** it furthermore comprises a secure kernel (8) contained in the lowest layer of the operating system (7) and a secure physical area, the safest part of the hardware architecture of this computer processing unit, the said security module executing in an autonomous manner the functions:
- of installation of new loading units (2, 3, 7);
- of control and implementation of the security policy rules such as allocation and control of the access rights as a function of the level of trust of each loading unit;
- of maintaining of the current state and of the integrity of the system as a function of the components of the operating system and of the loading units;
- of verification of the constraints defined by the installation constraints data structure, associated with each loading unit (2, 3, 7).

10. Computer processing unit according to Claim 8 or 9, **characterized in that**, on request for installation of a loading unit, the said security module performs a verification of the conditions on the identity of the loading unit, on the basis of an identification information data structure in respect of this loading unit, the verification operations comprising at least:
- the verification, on the basis of its identifier, that the site of origin hosting the said loading unit figures among the authorized sites;
- the verification of the certificate of authentication of the identity of the loading unit;
- the verification of the integrity of the loading unit;
- the verification, with reference to a minimum level of trust, that the level of trust associated with the loading unit does not prohibit the installation of the loading unit;
- the verification, with reference to a list of proscribed functionalities, that the functionality of the loading unit does not belong to this list and does not prohibit the installation of this loading unit;
- the verification, on the basis of its identifier of site of origin hosting the said loading unit, that the identity of the distributor of the loading unit does not prohibit the installation of the loading unit.

11. Computer processing unit according to one of Claims 8 to 10, **characterized in that**, on request for installation of a loading unit and in the presence of a non-empty list of installation constraints, the said security module furthermore performs:
- a call to the entry point of the loading unit so as to execute a plurality of verifications specific to the loading unit, such as verification of integrity of data or of parts of the code of the loading unit, initialization of specific data of the loading unit;
- a verification of the presence of components in the system or in the loading unit corresponding to positive attributes and of the absence of components or loading unit corresponding to negative attributes.

12. Computer processing unit according to Claim 11, **characterized in that** the verification in the presence of a non-empty list of installation constraints comprises the direct verification of the installation constraints on the basis of one or more lists of constraints attached to various loading units and/or the indirect verification on the basis of a delegation of authorization of the rules of installation constraints obtained by resolution.

13. Computer processing unit according to one of Claims 8 to 12, **characterized in that**, on request for installation of a loading unit and in the presence of a constituent data structure of a non-empty set of security policy rules, the said security module performs a verification of the acceptability of the demands of the loading unit, the said demands being able to comprise demands for access to resources of the system and the list of the loading units which are able to call at least one of the corresponding entry points.

14. Computer processing unit according to one of Claims 8 to 13, **characterized in that**, subsequent to the verification to the value true of the set of the previous verifications, the said security module authorizes the installation of the said loading unit, under the authority of the central processing unit of the said computer processing unit, otherwise, subsequent to the absence of verification to the value true of one of the previous verifications, the said security module inhibits the installation of the said loading unit, the refusal of installation being able to form the subject of a signalling at the level of the man-machine interface associated with the said processing unit.

15. Computer processing unit according to any one of Claims 8 to 14, **characterized in that** the security module (9) is installed in the said secure physical area (6) by way of the secure kernel of the said operating system, the said installed security module (9) being verified from the point of view of its integrity by an integrity verification mechanism during the said processing unit's booting sequence.
